# EUROPÄISCHE PATENTSCHRIFT

(11) **EP 4 031 341 B1**
(45) Veröffentlichungstag und Bekanntmachung des Hinweises auf die Patenterteilung: **21.02.2024**
(21) Anmeldenummer: 20775185.0
(22) Anmeldetag: 14.09.2020
(51) Int. Cl.: B28B 11/00, B28B 11/04, B28B 11/06, B41M 5/00, B41M 7/00, C04B 41/00, C04B 41/52, B41J 3/407

(54) **VERFAHREN ZUM ERZEUGEN EINES RELIEFARTIGEN DEKORS AUF EINER OBERFLÄCHE EINES KERAMISCHEN DRUCKMEDIUMS MITTELS PARTIKELAUFTRAG**
METHOD FOR PRODUCING A RELIEF-TYPE DECORATION ON A SURFACE OF A CERAMIC PRINTING MEDIUM BY MEANS OF PARTICLE DEPOSITION
PROCÉDÉ POUR GÉNÉRER UN DÉCOR EN RELIEF SUR UNE SURFACE D'UN SUPPORT D'IMPRESSION CÉRAMIQUE PAR APPLICATION DE PARTICULES

(30) Priorität: 20.09.2019 IT 201900016802; 27.12.2019 IT 201900025579
(43) Veröffentlichungstag der Anmeldung: 27.07.2022
(73) Patentinhaber: Durst Group AG, 39042 Brixen (IT)
(72) Erfinder: WALDNER, Stefan, 39024 Mals (IT); OBERHUBER, Dennis, 39040 Vahrn (IT)
(74) Vertreter: Kempkens, Anke
(86) Internationale Anmeldenummer: PCT/EP2020/025415
(87) Internationale Veröffentlichungsnummer: WO 2021/052627

(56) Entgegenhaltungen:
- CN-A- 107 235 632
- CN-A- 108 453 873
- US-A1- 2015 298 492

## Beschreibung

Die vorliegende Erfindung betrifft ein Verfahren zum Erzeugen eines reliefartigen Dekors auf einer Oberfläche eines keramischen Druckmediums mittels Partikelauftrag.

Aus dem Stand der Technik sind Verfahren zur Erzeugung einer dreidimensionalen Struktur auf keramischen Objekten bekannt.

In der EP 2 189 272 B1 wird beispielsweise die Realisierung einer derartigen dreidimensionalen Struktur auf einer Oberfläche eines keramischen Objektes erzielt, indem Tropfen einer strukturbildenden Masse mit einer Abgabevorrichtung auf ein zuvor auf die Oberfläche bedrucktes ein- oder mehrfarbiges Motiv abgegeben werden während das Objekt in eine Förderrichtung bewegt wird, und zwar auf einer Weise, dass die dreidimensionale Struktur durch halbzylinderförmige Erhebungen zur Erzeugung optischer Effekte in Verbindung mit dem darunter liegenden Motiv gebildet werden, welche Erhebungen sich quer zur Förderrichtung des Objektes erstrecken.

Aus dem Stand der Technik ist ein zweites Verfahren zur Realisierung einer dreidimensionalen Struktur auf einer Oberfläche eines keramischen Objektes bekannt, bestehend aus den Schritten: (a) Bereitstellen eines trockenen keramischen Objektes; (b) optional Aufbringen eines vorgegebenen Bildmotivs direkt auf die Oberfläche des keramischen Objektes, indem zumindest eine farbige Tinte mit Farbpartikeln direkt auf die Oberfläche des keramischen Objektes aufgetrageri und folgend eingeengt wird, (c) Abgeben von Tropfen eines Klebers mit einem Tintenstrahldrucker auf einen Teil der Oberfläche des keramischen Objektes; (d) Auftragen von keramischem Material in Form von Partikeln zumindest auf den abgegebenen Kleber, wodurch das keramische Material an den mit dem Kleber bedruckten Oberflächenteilen fixiert wird, und Entfernen von nicht fixiertem keramischem Material, um eine dreidimensionale Struktur zu bilden; und (e) Brennen des keramischen Objektes, um eine eingebrannte dreidimensionale Struktur auf der Oberfläche des Objektes zu realisieren.

Werden beim zweiten Verfahren Bildmotive unter dem Kleber beispielsweise direkt auf dem keramischem Substrat oder alternativ beim oben beschriebenen Verfahren aus der EP 2 189 272 B1 unter den halbzylinderförmigen Erhebungen aus strukturbildender Masse erzeugt, so kann es vorkommen, dass die Farbtöne der Bildmotive durch die Schicht der dreidimensionalen Struktur verändert sind, nachdem die keramischen Objekte gebrannt wurden.

Beim zweiten Verfahren lässt sich beim Entfernen des durch den Kleber nicht fixierten keramischen Materials meist nicht vermeiden, dass die die dreidimensionale Struktur bildenden und fixierten Partikel des keramischen Materials, wenn auch nur in sehr geringem Maße, mitentfernt werden. Dies hat in der Regel die Bildung einer mit statistisch verteilten Vertiefungen übersäte Oberfläche der dreidimensionalen Struktur und somit die Bildung von Unregelmässigkeiten in der Oberfläche der dreidimensionalen Struktur zur Folge. Die Bildung von Unregelmässigkeiten auf der Oberfläche der dreidimensionalen Struktur kann wiederum zu Glanzbändigeffekten führen.

Wenn das Entfernen des nicht fixierten keramischen Materials effizient erfolgen soll, so erfolgt das Entfernen desselben typischerweise durch Absaugen oder Abblasen mittels einer geeigneten Vorrichtung. Der Schritt des Entfernens des nicht fixierten keramischen Materials ist aber oft schwer kontrollierbar, sodass dieser wie oben ausgeführt meist zu Unregelmässigkeiten in der Oberfläche der dreidimensionalen Struktur führt, welche Unregelmässigkeiten wiederum zu einer mit Glanzbandingeffekten behafteten Oberfläche der dreidimensionalen Struktur führen können, die für das Erscheinungsbild des mit der dreidimensionalen Struktur gebildeten reliefartigen Dekors optisch störend sind.

Im Rahmen von Versuchen haben die Erfinder der vorliegenden Erfindung beobachtet, dass den mit den oben beschriebenen beiden Verfahren erzeugten dreidimensionalen Strukturen mit Vertiefungen in ihren Oberflächen jeweils das Problem anhaften kann, dass nach dem Bedrucken derselben mit einem ein- oder mehrfarbigen Motiv, indem eine oder mehrere farbige Tinten mit anorganischen Farbpigmenten aus einem Tintenstrahldrucker auf die entsprechenden Oberflächen abgegeben werden, in den Vertiefungen der unregelmäßigen Oberflächen der dreidimensionalen Struktur sich jeweils eine gegenüber den umliegenden Bereichen der Oberfläche der dreidimensionalen Struktur unkontrolliert variierende oder höhere Konzentration an Farbpigmenten ausbildet, die zu einem mit freiem Auge sichtbaren Farb- und/oder Glanzbanding und/oder gar zu einer Verzerrung des Bildmotivs führen kann. Die höhere Konzentration der Farbpigmente in den Vertiefungen in den Oberflächen der dreidimensionalen Struktur entsteht durch Migration der Pigmente von den die Vertiefungen umgebenden höheren Bereichen der Oberfläche der dreidimensionalen Struktur hin zu den entsprechenden Vertiefungen. Folgeschritte im Erzeugungsverfahren können aufgetretene Farb- und/oder Glanzbanding-Effekte und/oder das Ausmaß der Verzerrung des Bildmotivs verstärken.

Banding-Effekte sind bekanntlich sichtbare Beeinträchtigungen in der Qualität eines Bildes und kennzeichnen sich darin, dass in einem auf einer Oberfläche aufgebrachten bzw. gedruckten Bildes abrupte oder kontinuierliche Übergänge von Bild-Attributen, wie beispielsweise Glanz und/oder Farbe und/oder Schärfe, sich sichtbar und. unangenehm bemerkbar machen, wo keine Übergange dieser Art erwünscht sind.

Aus der CN107235632A ist ein weiteres Verfahren zum Erzeugen eines reliefartigen Dekors auf einer Oberfläche eines keramischen Druckmediums bekannt, umfassend die Schritte: a) Bereitstellen eines keramischen Druckmediums; b) Abgeben einer Flüssigkeit aus Glasur auf einen Teil der Oberfläche, sodass Erhebungen des reliefartigen Dekors gebildet werden, c) Aufbringen eines vorgegebenen ein- oder mehrfarbigen Bildmotivs auf die Oberflächen der Erhebungen, indem eine oder mehrere Tinten mit anorganischen Farbpigmenten auf die Oberflächen der Erhebungen aufgebracht werden, d) Brennen des keramischen Druckmediums, um ein eingebranntes reliefartiges Dekor auf der Oberfläche des Druckmediums zu erzeugen.

Aus der US2015/298492A1 und der CN108453873A ist ausserdem je ein Verfahren zur Herstellung einer mit einem reliefartigen Dekor versehenen Keramkfiiese vorbekannt, bei dem das Dekor durch Abgeben von Tropfen einer Fixierflüssigkeit mit einer Vielzahl von Düsen eines Tintenstrahldruckers auf einen Teil der Oberfläche und durch Auftragen von keramischem Material in Form von Partikeln zumindest auf die abgegebene Fixierflüssigkeit hergestellt wird, wobei folgend nicht fixiertes Material entfernt wird, sodass Erhebungen des reliefartigen Dekors gebildet werden. In der CN108453873A wird noch vorgängig zum Schritt des Abgebens der Tropfen der Fixierflüssigkeit die Oberfläche der Keramikfliese durch Tintenstrahldruck bemalt, um ein gewünschtes Muster zu erhalten.

Es wäre daher wünschenswert über ein Verfahren zu verfügen, mit dem die Realisierung eines mit einem Bildmotiv eingefärbten reliefartigen Dekors auf ein keramisches Druckmedium mit reduziertem Farb- und/oder Glanzbanding oder gar ohne Farb- und/oder Glanzbanding ermöglicht werden könnte.

Es ist daher die Aufgabe der vorliegenden Erfindung ein Verfahren zum Erzeugen eines mit einem ein- oder mehrfarbigen Bildmotiv eingefärbten reliefartigen Dekors auf einer Oberfläche eines keramischen Druckmediums bereitzustellen, mit welchem Verfahren die Gefahr des Auftretens von Farb- und/oder Glanzbanding-Effekten im Bildmotiv reduziert wird, und vorzugsweise entsprechende Dekore bereitzustellen, die weniger Farb- und/oder Glanzbanding-Effekte im Bildmotiv zeigen oder gar frei sind von Farb- und/oder Glanzbanding-Effekten, wenn das Bildmotiv mit Tinten umfassend anorganische Farbpigmente gebildet wird.

Erfindungsgemäss wird die Aufgabe mit einem Verfahren gelöst, das die Merkmale des Anspruchs 1 umfasst. Die Unteransprüche beziehen sich auf weitere vorteilhafte und gegebenenfalls zusätzlich erfinderische Ausführungsformen.

Der Erfindung liegt die Idee zugrunde, nach der Bildung von Erhebungen eines reliefartigen Dekors auf einer Oberfläche eines keramischen Druckmediums und vor dem Aufbringen eines vorgegebenen ein- oder mehrfarbigen Bildmotivs auf die Oberflächen der Erhebungen, indem eine oder mehrere Tinten mit anorganischen Farbpigmenten auf die Oberflächen der Erhebungen aufgebracht werden, eine deckende Glasur oder Engobe oder Smaltobe, jeweils in Form einer Suspension, auf zumindest einem Teil der Erhebungen des reliefartigen Dekors mit einer Abgabevorrichtung durch Besprühen oder Giessen derselben auf die entsprechenden Oberflächen aufzutragen und einzuengen.

Die Engobesuspension ist eine dünnflüssige Tonmineralmasse. Dabei kann es sich um Schlicker handeln. Engoben bilden anders als Glasuren keine Schutzschicht für das keramische Druckmedium.

Unter einer Suspension aus "Smaltobe" wird in der vorliegenden Beschreibung eine Mischung einer Glasursuspension und einer Engobesuspension verstanden.

Das erfindungsgemässe Überdecken der mit keramischem Material gebildeten Erhebungen mit der Glasur oder Engobe oder Smaltobe bewirkt wirksam eine Glättung der Oberflächen der Erhebungen des reliefartigen Dekors, wenn Vertiefungen in der Oberfläche der Erhebungen des reliefartigen Dekors im Verfahren gebildet wurden, sodass das Erzeugen eingefärbter Erhebungen eines reliefartigen Dekors mit verringertem oder gar nicht vorhandenem Farb- und/oder Glanzbanding möglich ist.

Ein erfindungsgemässes Verfahren zum Erzeugen eines reliefartigen Dekors auf einer Oberfläche eines keramischen Druckmediums wird durchgeführt, indem zunächst ein keramisches Druckmedium bereitgestellt wird. Anschliessend erfolgt ein Abgeben von Tropfen einer Fixierflüssigkeit mit einer Vielzahl von Düsen eines Tintenstrahldruckers auf einen Teil der Oberfläche des keramischen Druckmediums. Darauffolgend erfolgt ein Auftragen von keramischem Material in Form von Partikeln zumindest auf die abgegebene Fixierlüssigkeit, wodurch ein Fixieren des Materials durch die Fixierflüssigkeit erreicht wird, wobei folgend nicht fixiertes keramisches Material entfernt wird, sodass Erhebungen des reliefartigen Dekors gebildet werden. Anschliessend erfolgt ein Aufbringen eines vorgegebenen ein- oder mehrfarbigen Bildmotivs auf die Oberflächen der Erhebungen, indem eine oder mehrere Tinten mit anorganischen Farbpigmenten auf die Oberflächen der Erhebungen aufgebracht werden. Schliesslich erfolgt ein Brennen des keramischen Druckmediums, um ein eingebranntes reliefartiges Dekor auf der Oberfläche des Druckmediums zu erzeugen.

Als Oberfläche des Druckmediums wird jene Fläche des Druckmediums bezeichnet, die dem Wirkungsbereich eines Tintenstrahldruckers, einer Abgabe- bzw. Applikationsvorrichtung bei der Durchführung des entsprechenden Schrittes im erfindungsgemässen Verfahrens direkt exponiert wird.

Dementsprechend handelt es sich bei dem. erfindungsgemässen Verfahren um ein Verfahren zum Erzeugen eines reliefartigen Dekors auf einer Oberfläche eines keramischen Druckmediums, umfassend die Schritte:
a) Bereitstellen eines keramischen Druckmediums;
b) Abgeben von Tropfen einer Fixierflüssigkeit mit einer Vielzahl von Düsen eines Tintenstrahldruckers auf einen Teil der Oberfläche;
c) Auftragen von keramischem Material in Form von Partikeln zumindest auf die abgegebene Fixierflüssigkeit und Fixieren des Materials durch die Fixierflüssigkeit, wobei folgend nicht fixiertes keramisches Material entfernt wird, sodass Erhebungen des reliefartigen Dekors gebildet werden;
d) Aufbringen eines vorgegebenen ein- oder mehrfarbigen Bildmotivs auf die Oberflächen der Erhebungen, indem eine oder mehrere Tinten mit anorganischen Farbpigmenten auf die Oberflächen der Erhebungen aufgebracht werden;
e) Brennen des keramischen Druckmediums, um ein eingebranntes reliefartiges Dekor auf der Oberfläche des Druckmediums zu erzeugen.

Erfindungsgemäss wird nach Schritt (c) und vor Schritt (d) eine deckende Glasur oder Engobe oder Smaltobe, jeweils in Form einer Suspension, auf zumindest einem Teil der Erhebungen mit einer Abgabevorrichtung durch Besprühen oder Giessen derselben auf die entsprechenden Oberflächen aufgetragen und eingeengt.

Dadurch wird direkt auf den Erhebungen des reliefartigen Dekors eine Deckschicht aus Glasur oder Engobe oder Smaltobe zur Aufnahme des ein- oder mehrfarbigen Bildmotivs ausgebildet. Der Auftrag des keramischen Materials auf die abgegebene Fixierflüssigkeit muss verständlicherweise erfolgen bevor die Fixierflüssigkeit vollständig eingeengt. wurde, damit eine vorübergehende Fixierung des keramischen Materials durch die Fixierflüssigkeit bis zur Entfernung von nicht fixiertem, also überschüssigem, keramischem Material zur Ausbildung des reliefartigen Dekors gewährleistet wird.

Unter dem Begriff "Einengen" wird die Absorption einer Flüssigkeit durch eine mit zumindest einer mit ihr in Kontakt stehenden Partikelschicht und/oder die Entfernung zumindest eines flüchtigen Bestandteils dieser Flüssigkeit durch Trocknung verstanden.

Das keramische Material ist beim Auftrag desselben gemäss Schritt (c) typischerweise trocken, damit es nicht verklumpt und nicht seine Rieselfähigkeit verliert und entsprechend nicht als Klumpen auf das Druckmedium aufgebracht wird.

Das Aufbringen des keramischen Materials auf die Fixierflüssigkeit bewirkt vorteilhafterweise ein Einengen der Fixierflüssigkeit mittels durch Absorption desselben im keramischen Material.

Gemäss einer bevorzugten Ausführungsform des erfindungsgemässen Verfahrens werden die mit Schritt (c) gebildeten Erhebungen vor dem entsprechenden Auftrag der deckenden Glasur oder Engobe oder Smaltobe durch Einwirken von Energie, insbesondere Wärme, mithilfe einer geeigneten Energiequelle teilweise oder vollständig getrocknet.

Die Wärmequelle kann eine NIR- und/oder IR-Strahlungsquelle sein.

Gemäss einer bevorzugten Ausführungsform des erfindungsgemässen Verfahrens wird vor Schritt (b) eine grundierende Glasur oder Engobe oder Smaltobe, jeweils in Form einer Suspension, auf zumindest einem Teil, vorzugsweise auf die gesamte Oberfläche des keramischen Druckmediums durch Besprühen oder Giessen derselben mit einer Abgabevorrichtung aufgetragen und teilweise oder vollständig eingeengt. Dadurch wird eine Grundierungsschicht aus Glasur oder Engobe oder Smaltobe zur Aufnahme der Fixierflüssigkeit direkt auf der Oberfläche des keramischen Druckmediums ausbildet.

In Schritt (a) kann als keramisches Druckmediums ein gebranntes oder ungebranntes keramisches Druckmedium bereitgestellt werden. Statt einem keramischen Druckmedium kann auch ein glasartiges Druckmedium zum Einsatz kommen. In Bezug auf den Brennvorgang ist jedenfalls wichtig, dass das Druckmedium brennstabil ist.

Die Porosität der Oberfläche der grundierenden Glasur- oder Engobe- oder Smaltobe schicht bzw. der volumetrische Durchmesser der Partikelgrösse d50(v) und/oder d100(v) der Partikel der grundierenden Glasur- oder Engobe- oder Smaltobeschicht kann kleiner sein als die Porosität der Oberfläche des ungebrannten oder gebrannten keramischen Druckmediums bzw. als der volumetrische Durchmesser der Partikelgrösse d50(v) und/oder d100(v) der Partikel des ungebrannten oder gebrannten keramischen Druckmediums.

Dementsprechend kann mit der Aufbringung der grundierenden Glasur- oder Engobe- oder Smaltobeschicht der Einbrennprozess leichter kontrolliert werden.

Das Absorptionsverhalten der grundierenden Glasur- oder Engobe- oder Smaltobeschicht in Bezug auf die damit zu bedruckende Oberfläche hängt unter anderem von der Art, z.B. von der Porosität oder der Partikelverteilung oder der Oberflächenenergie, der damit zu bedruckenden Oberfläche, und dem Benetzungsverhalten der grundierenden Glasur- oder Engobe- oder Smaltobesuspension in Bezug auf die zu benetzende Oberfläche zusammen.

Ein derartiges Verhalten gilt genauso für andere Suspensionen im betreffenden Verfahrensschritt.

Gemäß einer weiteren bevorzugten Ausführungsform des erfindungsgemässen Verfahrens wird nach Schritt (c) und vor Schritt (d) die deckende Glasur- oder Engobe- oder Smaltobesuspension zumindest auf einem Teil der Oberflächen der Täler des reliefartigen Dekors, welcher Teil der Oberflächen der Täler vorzugsweise mit zumindest einem Teil der Erhebungen des reliefartigen Dekors unmittelbar angrenzt, vorzugsweise auf die gesamte Oberfläche des reliefartigen Dekors aufgebracht und eingeengt.

Unter Täler des reliefartigen Dekors werden entweder gegebenenfalls die Teile des keramischen Druckmediums oder gegebenenfalls die Teile der grundierenden Glasur- oder Engobe- oder Smaltobeschicht - d.h. falls eine solche direkt auf die Oberfläche des keramischen Druckmediums aufgebracht wurde - verstanden, die jeweils nicht mit dem keramischem Material, das die Erhebungen des reliefartigen Dekors bildet, bedeckt sind und zwischen den Erhebungen des reliefartigen Dekors liegen. Hingegen werden unter Täler des reliefartigen Dekors nicht die unerwünschten Vertiefungen in der Oberfläche der Erhebungen des reliefartigen Dekors, deren Entstehung meist durch den Schritt des Entfernens des auf die Fixierflüssigkeit aufgebrachten keramischen Materials nicht vermieden werden kann - wie eingangs thematisiert - verstanden.

Von Vorteil sind diese beiden bevorzugten Ausführungsformen, da dadurch zumindest teilweise oder gegebenenfalls zusätzlich eine Verminderung des Hervorscheinens der Untergrundfarbe des keramischen Druckmediums erzielt wird. Bei Erhebungen des reliefartigen Dekors, die relativ schmal sind, bewirkt die Deckschicht aus Glasur oder Engobe oder Smaltobe zusätzlich eine verbesserte seitliche Stabilisierung der Erhebungen und somit insgesamt eine verbesserte Haftung der Erhebungen des reliefartigen Dekors an den damit bedeckten Untergrund, d.h. entweder an der Oberfläche des keramischen Druckmediums oder an der Oberfläche der grundierenden Glasur- oder Engobe- oder Smaltobeschicht. Dadurch wird die Widerstandsfähigkeit des reliefartigen Dekors gegenüber mechanischem Abrieb verbessert.

Die Engobe kann je nach ihrer chemischen Zusammensetzung und Wahl bei ihrer Verwendung im erfindungsgemässen Verfahren nach dem Einbrennen einen Matt- oder Glanzeffekt bewirken.

Werden gemäß Schritt (b) und (c) beispielsweise ein Teil der Erhebungen als längliche Erhebungen mit einer Breite von ≤ 5mm, vorzugsweise ≤ 2 mm erzeugt, so kann ein Abplatzen derselben bei mechanischer Beanspruchung quer zur Längsrichtung der Erhebungen sehr wirksam verringert oder gar vermieden werden, wenn die deckende Glasur- oder Engobe- oder Smaltobesuspension - wie in der vorgenannten weiteren bevorzugten Ausführungsform offenbart - auf einen Teil der Oberflächen der Täler des reliefartigen Dekors, welcher Teil mit zumindest einem Teil der Erhebungen des reliefartigen Dekors unmittelbar angrenzt oder auf die gesamte Oberfläche des reliefartigen Dekors aufgebracht wird, sodass die Lebensdauer und mechanische Resistenz gebrannter reliefartiger Dekore auf dem keramischen Medium erhöht werden kann. Ein anderer Teil der länglichen Erhebungen des reliefartigen Dekors kann in dieser bevorzugten Ausführungsform verständlicherweise mit einer grösseren Breite, vorzugsweise eine Breite von > 0,5cm, vorzugsweise >2cm erzeugt werden.

Zumindest ein Teil der Erhebungen des reliefartigen Dekors können jeweils länglich in eine erste Richtung ausgebildet sein, wobei deren Länge jeweils vorzugsweise in einem Bereich von > 5 mm bis 60cm beträgt, besonders bevorzugt in einem Bereich von > 5 mm bis 30cm, besonders bevorzugt in einem Bereich von > 5 mm bis 10 cm, ganz besonders bevorzugt ein einem Bereich von > 5 mm bis 3 cm.

Gemäss einer besonders bevorzugten Ausführungsform wird gemäss Schritt (d) das Aufbringen des vorgegebenen Bildmotivs ausschliesslich direkt auf die jeweils auf den zumindest einen Teil der Oberflächen der Erhebungen und Täler des reliefartigen Dekors aufgebrachte deckende Glasur oder Engobe oder Smaltobe aufgebracht.

Überraschenderweise hat sich bei dieser besonders bevorzugten Ausführungsform des erfindungsgemässen Verfahrens gezeigt, dass reliefartige Dekore mit reduzierten Farb- und/oder Glanzbanding Effekten oder gar frei von Farb- und/oder Glanzbanding Effekten im Bildmotiv herstellbar sind. Von Vorteil ist diese Weiterbildung zudem, da dadurch Farbgleichheit auf allen mit derselben Farbe bedruckten Stellen der Oberfläche des reliefartigen Dekors nach dem Brennen erzielt werden kann.

Demgegenüber hat das direkte Bedrucken der Oberflächen der Erhebungen und Täler des reliefartigen Dekors mit unterschiedlichen Oberflächenzusammensetzungen , mit einem Bildmotiv mit derselben Farbe in der Regel zur Folge, dass sich unterschiedliche Färbungen auf den entsprechenden Oberflächen der Erhebungen und Täler nach dem Brennen ausbilden und daher das reliefartige Dekor farbbanding Effekte im Bildmotiv aufweisen. Die Herstellung von farb- und/oder glanzbandingfreien, reliefartigen Dekoren auf keramischen Druckmedien ist in der Keramikindustrie, insbesondere in der Fliesenindustrie, von grosser Wichtigkeit.

Die Porosität der Oberfläche der deckenden Glasur- oder Engobe- oder Smaltobeschicht bzw. der volumetrische Durchmesser der Partikelgrösse d50(v) und/oder d100(v) der Partikel der deckenden Glasur- oder Engobe- Samaltobeschicht ist typischerweise kleiner als die Porosität der Oberfläche des, die Erhebungen bildenden Partikel des keramischen Materials bzw. als der volumetrische Durchmesser der Partikelgrösse d50(v) und/oder d100(v) der Partikel des keramischen Materials.

Als deckende Glasur oder Engobe, jeweils in Form einer Suspension, kann beispielsweise eine Glasur- oder Engobesuspension verwendet werden, umfassend Wasser, zumindest eine Fritte, und vorzugsweise ein Flussmittel, enthaltendes Glasur- oder Engobematerial, jeweils in Form von Partikeln, wobei das Glasur- oder Engobematerial Partikel wenigstens einer Partikelgrößenpopulation enthält, wobei deren Partikel ≥45 µm zwischen 0 und 7 Gew% des Gesamtgewicht des Glasur- oder Engobematerial ausmachen.

Als grundierende Glasur oder Engobe, jeweils in Form einer Suspension, kann beispielsweise eine Glasur- oder Engobesuspension verwendet werden, umfassend Wasser, zumindest eine Fritte, und vorzugsweise ein Flussmittel, enthaltendes Glasur- oder Engobematerial, jeweils in Form von Partikeln, wobei das Glasur- oder Engobematerial Partikel einer Partikelgrößenpopulation enthält, wobei deren Partikel ≥45 µm zwischen 0 und 7 Gew% des Gesamtgewicht des Glasur- oder Engobematerial ausmachen.

Das Aufbringen des ein- oder mehrfarbigen Bildmotivs auf das reliefartige Dekor erfolgt vorzugsweise indem Tropfen einer oder mehrerer Tinten mit anorganischen Farbpigmenten aus einer Applikationsvorrichtung, vorzugsweise aus Düsen eines Tintenstrahldruckers, auf die entsprechende Oberfläche oder Oberflächen des reliefartigen Dekors abgegeben werden. Gemäss einer bevorzugten Ausführungsform des Verfahrens erfolgt während des Abgebens der Tropfen in Schritt (b) und/oder (d) eine kontinuierliche unidirektionale Relativbewegung zwischen Düsen des jeweils zum Einsatz kommenden Tintenstrahldruckers und dem Druckmedium.

Gemäss der vorliegenden Erfindung ist die Fixierflüssigkeit eine strukturbildende Glasursuspension, die zumindest eine Fritte, und vorzugsweise ein Flussmittel, enthaltendes Glasurmaterial in Form von Partikeln umfasst.

Gemäss einer besonders bevorzugten Ausführungsform ist die Fixierflüssigkeit eine strukturbildende Glasursuspension, umfassend Wasser, zumindest eine nicht-wässrige polare Flüssigkeit, ein zumindest eine Fritte, und vorzugsweise ein Flussmittel, enthaltendes Glasurmaterial in Form von Partikeln, wobei das Glasurmaterial Partikel wenigstens einer Partikelgrößenpopulation enthält, die einen volumetrischen Durchmesser der Partikelgrösse von 1 µm ≤ d100(v) ≤ 10 µm, vorzugsweise 2 µm ≤ d100(v) ≤ 3 µm aufweist.

Die strukturbildende Glasursuspension kann ein Polymer umfassen.

Derartige Fixierflüssigkeiten tragen zwar nur in geringem Maße zur Erhöhung der Erhebungen des auszubildenden reliefartigen Dekors bei, jedoch weist diese Weiterbildung des erfindungsgemässen Verfahrens den entscheidenden Vorteil auf, dass derartige Fixierflüssigkeiten mit einem gewöhnlichen DOD-Tintenstrahldrucker verdruckt bzw. verarbeitet werden können.

Dementsprechend wird gemäss einer bevorzugten Ausführungsform des erfindungsgemässen Verfahrens die Fixierflüssigkeit, insbesondere die strukturbildende Glasursuspension mit einem gewöhnlichen DOD-Tintenstrahldrucker abgegeben.

Die oben genannte strukturbildende Glasursuspension als Fixierflüssigkeit mit Partikelgrössen von 1 µm ≤ d100(v) ≤ 10 µm, vorzugsweise 2 µm ≤ d100(v) ≤ 3 µm kann beispielsweise in solchen Mengen aufgetragen, dass die dadurch ausgebildeten Erhebungen des reliefartigen Dekors eine Höhe aufweist, die im Wesentlichen mindestens 1µm beträgt, wobei durch den nachfolgenden Auftrag des keramischen Materials auf die Fixierflüssigkeit die ausgebildeten Erhebungen eine Gesamthöhe aufweist, die im Wesentlichen mindestens 50µm, bevorzugt mindestens 100µm beträgt.

Gemäss einer anderen besonders bevorzugten Ausführungsform ist die Fixierflüssigkeit eine strukturbildende Glasursuspension, umfassend Wasser, zumindest eine nicht-wässrige polare Flüssigkeit, ein zumindest eine Fritte, und vorzugsweise ein Flussmittel, enthaltendes Glasurmaterial in Form von Partikeln, wobei das Glasurmaterial Partikel wenigstens einer Partikelgrößenpopulation enthält, die einen volumetrischen Durchmesser der Partikelgrösse von 10 µm ≤ d50(v) ≤ 50 µm und von 45 µm ≤ d100(v) ≤ 100 µm aufweist.

Von Vorteil ist diese Weiterbildung, da dadurch Erhebungen des reliefartigen Dekors mit einer deutlich grösseren Höhe erzielt werden können als mit der vorher genannten strukturbildenden Glasursuspension. Verdruckt bzw. verarbeitet können derartige strukturbildende Fixierflüssigkeiten beispielsweise mit Tintenstrahldrucker mittels Stössel betriebener Tintenstrahldruckköpfe.

Als Beispiel für solche Tintenstrahldruckköpfe seien die in der Beschreibung der WO 2013/013983 A1 von der gleichnamigen Anmelderin offenbarten Tintenstrahldruckköpfe für Tintenstrahldrucker zu erwähnen, die mittels Stössel betrieben werden. Aufgrund des großen Innendurchmessers der Düsen zwischen 250µm bis 350 µm lassen sich bei derartigen Druckköpfen Glasursuspensionen mit größeren Partikeln drucken als bei den sonst typischen piezoelektrisch betriebenen DOD-Tintenstrahldrucker aus dem Stand der Technik, die typischerweise Düsen mit einem Innendurchmesser von lediglich bis zu 50 µm umfassen.

Dementsprechend wird gemäss einer bevorzugten Ausführungsform des erfindungsgemässen Verfahrens die Fixierflüssigkeit mit einem Tintenstrahldrucker mittels Stössel betriebener Tintenstrahldruckköpfe abgegeben.

Die oben genannte strukturbildende Glasursuspension als Fixierflüssigkeit mit Partikelgrössen von 10 µm ≤ d50(v) ≤ 50 µm und von 45 µm ≤ d100(v) ≤ 100 µm kann beispielsweise in solchen Mengen aufgetragen werden, dass die dadurch ausgebildeten Erhebungen eine Höhe in einem Bereich zwischen von 70 bis 2000 µm aufweisen, vorzugsweise eine Höhe in einem Bereich zwischen von 150 bis 1000 µm aufweisen, wobei durch den nachfolgenden Auftrag des keramischen Materials auf die Fixierflüssigkeit die ausgebildeten Erhebungen eine Gesamthöhe in einem Bereich von mindestens 110µm aufweisen, vorzugsweise eine Höhe von mindestens von 350 µm erreichen können.

In einer ersten bevorzugten Ausführungsform des erfindungsgemässen Verfahrens ist oder sind die Abgabevorrichtung zur Abgabe der deckenden Glasur- oder Engobe- oder Smaltobesuspension und die Abgabevorrichtung zum Auftrag der grundierenden Glasur- oder Engobe- oder Smaltobesuspension dieselbe Abgabevorrichtung oder unterschiedliche Abgabevorrichtungen, die Sprühdüsen umfasst oder umfassen.

Entsprechend kann gemäß zumindest einer dieser bevorzugten Ausführungsformen der Auftrag der deckenden Glasur- oder Engobe- oder Smaltobesuspension und/oder der Auftrag der grundierenden Glasur- oder Engobe- oder Smaltobesuspension durch Besprühen derselben auf die entsprechende Oberfläche oder Oberflächen mittels Sprühdüsen erfolgen.

In einer zweiten bevorzugten Ausführungsform des erfindungsgemässen Verfahrens ist oder sind die Abgabevorrichtung zur Abgabe der deckenden Glasur- oder Engobe- oder Smaltobesuspension und zum Auftrag der grundierenden Glasur- oder Engobe- oder Smaltobesuspension dieselbe Abgabevorrichtung oder unterschiedliche Abgabevorrichtungen, die zumindest eine längliche Schlitzdüse umfasst oder umfassen.

Entsprechend kann gemäß der zweiten bevorzugten Ausführungsformen der Auftrag der deckenden Glasur- oder Engobe- oder Smaltobesuspension und/oder der Auftrag der grundierenden Glasur- oder Engobe- oder Smaltobesuspension durch Giessen derselben auf die entsprechende Oberfläche oder Oberflächen mittels zumindest einer länglichen Schlitzdüse erfolgen. Längliche Schlitzdüsen sind so konstruiert, dass sie die Glasur- oder Engobe- oder Smaltobesuspension aus der Schlitzdüse in Form eines Vorhangs kontinuierlich über eine längere Zeitspanne und nicht stossartig abgeben können.

Die sogenannte "Velatrice Masterfall" von der Firma Airless ist ein Beispiel für eine solche Abgabevorrichtung. Aus dem Stand der Technik sind auch Glocken-Systeme bekannt, die ausgelegt sind die Glasur in Form eines Vorhangs, der glockenförmig ist, durch Giessen abzugeben.

Die länglichen Schlitzdüsen können Flachstrahldüsen sein.

In einer dritten bevorzugten Ausführungsform des erfindungsgemässen Verfahrens ist oder sind die Abgabevorrichtung zur Abgabe der deckenden Glasur- oder Engobe- oder Smaltobesuspension und zum Auftrag der grundierenden Glasur- oder Engobe- oder Smaltobesuspension dieselbe Abgabevorrichtung oder unterschiedliche Abgabevorrichtungen, die zumindest eine Scheibenzentrifuge umfasst oder umfassen. Die Scheibenzentrifuge bewirkt ein Versprühen der entsprechenden Suspension.

Entsprechend kann gemäß zumindest einer dieser bevorzugten Ausführungsformen der Auftrag der deckenden Glasur- oder Engobe- oder Smaltobesuspension und/oder der Auftrag der grundierenden Glasur- oder Engobe- oder Smaltobesuspension durch Versprühen bzw. Besprühen derselben auf die entsprechende Oberfläche oder Oberflächen mittels zumindest einer Scheibenzentrifuge erfolgen.

In einer bevorzugten Ausgestaltung des erfindungsgemässen Verfahrens wird die grundierende Glasur- oder Engobe- oder Smaltobesuspension und oder die deckende Glasur- oder Engobe- oder Smaltobesuspension bereitgestellt, die nach dem Einbrennen jeweils eine weißliche oder farbige, insbesondere gräuliche Farbe ausbildet oder ausbilden.

Die deckende Glasursuspension kann sich in ihrer chemischen Zusammensetzung von der grundierenden Glasursuspension unterscheiden oder dieselbe chemische Zusammensetzung aufweisen. Die deckende Engobesuspension kann sich ebenfalls in ihrer chemischen Zusammensetzung von der grundierenden Engobesuspension unterscheiden oder dieselbe chemische Zusammensetzung aufweisen. Dasselbe gilt auch für die grundierende und deckende Smaltobesuspension.

Es hat sich gezeigt, dass in vielen Fällen eine klare Trennlinie zwischen der mit keramischen Material gebildeten Erhebungen und der deckenden Glasur- oder Engobe- oder Smaltobeschicht entweder mit dem freien Auge oder zumindest mit dem Mikroskop sichtbar ist.

Gemäss einer bevorzugten Ausführungsform werden die keramischen Druckmedien vor dem Abgeben von Tropfen der Fixierflüssigkeit gemäß Schritt (b) auf eine Temperatur zwischen 20°C und 55°C gebracht, wobei das Abgeben der Tropfen gemäß Schritt (b) auf den Teilen der Oberfläche erfolgt während das keramische Druckmedium eine entsprechende Temperatur zwischen 20°C und 120°C aufweist.

Das Entfernen des nicht fixierten keramischen Materials gemäß dem zweiten Unterschritt des Schrittes (c) kann beispielsweise mit einer Absaugvorrichtung oder einer Abblasvorrichtung erfolgen.

Gemäß einer weiteren bevorzugten Ausführungsform des Verfahrens wird auf dem gemäss Schritt (d) aufgetragenen Bildmotiv eine Schutzschichtzusammensetzung umfassend mindestens eine Fritte aufgetragen, die nach dem Einbrennen eine durchsichtige Schutzschicht für das Bildmotiv ausbildet.

Die Schutzschicht kann aus einer Schutzschichtzusammensetzung gebildet werden, die zur Erhöhung der mechanischen Resistenz des Bildmotivs gegenüber mechanischem Abrieb und/oder und zur Erhöhung der chemischen Resistenz gegenüber Säuren und Laugen geeignet ist. Dem Fachmann sind die entsprechenden Materialien bekannt.

Die Auftragung dieser Schutzschichtzusammensetzung auf das gemäss Schritt (d) gebildete Bildmotiv zur Ausbildung der Schutzschicht kann mit einer Abgabevorrichtung, die vorzugsweise mit Sprühdüsen bereitgestellt wird, durch Besprühen derselben auf das Bildmotiv, erfolgen. Die Sprühdüsen der Abgabevorrichtung können Flachstrahldüsen sein.

Alternativ kann die Auftragung dieser Schutzschichtzusammensetzung auf das gemäss Schritt (d) gebildete Bildmotiv zur Ausbildung einer Schutzschicht mit einer Abgabevorrichtung erfolgen, die vorzugsweise mit zumindest einer längliche Schlitzdüse bereitgestellt wird, durch Giessen derselben auf die entsprechende Oberfläche oder Oberflächen erfolgen.

Gemäß einer bevorzugten Ausführungsform des erfindungsgemässen Verfahrens sind die Sprühdüsen der Abgabevorrichtung für die Auftragung der deckenden Glasur- oder Engobe- oder Smaltobesuspension und/oder für die Auftragung der grundierenden Glasur- oder Engobe oder Smaltobesuspension und/oder für die Auftragung der Schutzschichtzusammensetzung keine Düsen eines Tintenstrahldruckers, die gemäß dem Tintenstrahlprinzip, d.h. dem Drop-on-Demand-Prinzip, arbeiten.

Gemäß einer ersten Variante einer bevorzugten Ausführungsform des erfindungsgemässen Verfahrens erfolgen der Auftrag der Fixierflüssigkeit gemäss Schritte (b) und der Auftrag des keramischen Materials gemäss Schritt (c) dergestalt, dass die Erhebungen mit plateauartigen, flachen Oberflächen ausgebildet werden.

Dadurch bilden die Oberflächen der Erhebungen jeweils im Wesentlichen eine Ebene aus. Vorzugsweise werden die einzelnen Erhebungen mit ihren Oberflächen so ausgebildet, dass die Ebenen der Erhebungen zueinander im Wesentlichen fluchtend ausgerichtet sind.

Unter reliefartigen Dekoren mit Erhebungen mit plateauartigen, flachen Oberflächen werden somit jedenfalls reliefartige Dekore ohne halbzylinderförmige Erhebungen verstanden.

Die Erzeugung derartiger reliefartiger Dekore kann bevorzugt dadurch erfolgen, dass entweder auf das keramische Druckmedium oder auf eine auf das keramische Druckmedium aufgebrachte und teilweise oder vollständig eingeengte Grundierungsschicht aus Glasur oder Engobe oder Smaltobe, unmittelbar nebeneinander aufgebrachte Tropfen der Fixierflüssigkeit im Wesentlichen vollständig oder vollständig ineinanderlaufen bevor das keramische Material gemäss Schritt (c) zumindest auf die abgegebene Fixierflüssigkeit aufgetragen wird.

Gemäß einer zweiten Variante einer bevorzugten Ausführungsform des erfindungsgemässen Verfahrens erfolgt mit Schritt (b) ein Abgeben von Tropfen einer strukturbildenden Glasursuspension als Fixierflüssigkeit, die zumindest eine Fritte, und vorzugsweise ein Flussmittel, enthaltendes Glasurmaterial in Form von Partikeln umfasst, mit einer Vielzahl von Düsen eines Tintenstrahldruckers auf einen Teil der Oberfläche und teilweise Einengen der auf dem Teil aufgebrachten Tropfen, dergestalt, dass die teilweise eingeengte strukturbildende Glasursuspension halbzylinderförmige Erhebungen ausbildet, wobei während des Abgebens der Tropfen eine kontinuierliche unidirektionale Relativbewegung zwischen den Düsen und dem Druckmedium erfolgt, wobei die Abgabe und das teilweise Einengen der Tropfen in Schritt (b) dergestalt erfolgen, dass eine strukturbildende Glasurschicht mit unmittelbar benachbarten halbzylinderförmigen Erhebungen mit jeweils einer Grundfläche und Mantelfläche ausgebildet wird, deren jeweilige Längsachse sich in eine erste Richtung erstreckt, wobei deren Grundflächen und deren Mantelflächen miteinander teilflächig überlappen.

Diese Weiterbildung weist den Vorteil auf, dass das bevorzugte erfindungsgemässe Ineinandergreifen der Mantelflächen und der Grundflächen der halbzylinderförmigen Erhebungen eine verbesserte gegenseitige seitliche Stabilisierung der Erhebungen der strukturbildenden Glasurschicht bewirkt und somit insgesamt eine verbesserte Haftung der strukturbildenden Glasurschicht an die damit bedeckte Oberfläche, und zwar nicht nur nach dem Einbrennen, sondern auch bereits vor dem Einbrennschritt.

Unter einem Zylinder wird im Folgenden ein Körper bezeichnet, der von einer Mantelfläche und von zwei gegenüberliegenden Schnittkreisflächen eingeschlossen wird. Als Halbzylinder wird im Folgenden jene Hälfte des entsprechenden Körpers bezeichnet, die gebildet wird, wenn der Körper durch beide Schnittkreisflächen geschnitten ist. Entsprechend kann unter einem Halbzylinder im Folgenden ein Körper bezeichnet werden, der von einer Mantelfläche und von zwei gegenüberliegenden Schnittflächen eines Halbkreises sowie von einer Grundfläche eingeschlossen wird. Unter dem Begriff halbkreisförmig wird im Sinne der vorliegenden Erfindung natürlich auch ein von einer Sekante begrenzter Kreisabschnitt verstanden.

Die halbzylinderförmigen Erhebungen sind jeweils länglich in die erste Richtung ausgebildet, wobei deren Länge jeweils vorzugsweise in einem Bereich von 0,5cm bis 50cm beträgt, besonders bevorzugt in einem Bereich von 0,5cm bis 25cm, besonders bevorzugt in einem Bereich von 0,5cm bis 10 cm, ganz besonders bevorzugt ein einem Bereich von 0,5cm bis 3 cm.

Gemäß einer ganz besonders bevorzugten Ausführungsform des erfindungsgemässen Verfahrens erfolgt in Schritt (b) die Abgabe und das teilweise Einengen der Tropfen der strukturbildenden Glasursuspension dergestalt, dass eine strukturbildende Glasurschicht mit unmittelbar benachbarten halbzylinderförmigen Erhebungen mit jeweils einer Grundfläche und einer Mantelfläche ausgebildet wird, deren jeweilige Längsachse sich in eine erste Richtung erstreckt, wobei deren Grundflächen und deren Mantelflächen miteinander teilflächig überlappen, dergestalt, dass gegenüberliegende Randbereiche der Grundflächen und gegenüberliegende Randbereiche der Mantelflächen der jeweiligen Erhebungen miteinander überlappen.

Gemäß einer weiteren ganz besonders bevorzugten Ausführungsform des erfindungsgemässen Verfahrens wird in Schritt (b) bei der unidirektionale Relativbewegung das Druckmedium in eine Transportrichtung transportiert, wobei vorzugsweise die erste Richtung die Transportrichtung des Druckmediums ist, sodass die Abgabe und ein teilweise Einengen der Tropfen der strukturbildenden Glasursuspension in Schritt (b) dergestalt erfolgen, dass eine strukturbildende Glasurschicht mit unmittelbar benachbarten halbzylinderförmigen Erhebungen mit jeweils einer Grundfläche und Mantelfläche ausgebildet wird, deren jeweilige Längsachse sich in die Transportrichtung erstreckt, wobei deren Grundflächen und deren Mantelflächen miteinander teilflächig überlappen.

Der für Schritt (b) bereitgestellte Tintenstrahldrucker kann gemäß einer besonders bevorzugten Ausführungsform unmittelbar benachbarte Düsen entlang einer quer zur Transportrichtung ausgerichteten zweiten Richtung umfassen, welche Abstände die Auflösung quer zur Transportrichtung definieren, wobei die unmittelbar benachbarten Düsen in Transportrichtung dergestalt beabstandet angeordnet werden, dass sie entlang der zweiten Richtung unmittelbar einander angrenzende und zu bedruckende Pixel von auf der Oberfläche angedachten Pixelreihen mit der strukturbildenden Glasursuspension so zeitlich versetzt bedrucken und das Druckmedium in Transportrichtung mit einer solchen Geschwindigkeit transportiert wird, dass eine zeitlich versetzte teilweise Einengung der auf die Oberfläche aufgetragenen Tropfen erfolgt und später aufgebrachten Tropfen einer Rasterzeile mit früher aufgebrachten Tropfen einer unmittelbar benachbarten Rasterzeile nicht oder nur teilweise in Schritt (b) im Zustand als Suspensionen ineinanderlaufen.

Gemäß einer besonders bevorzugten Ausführungsform des Verfahrens wird jede halbzylinderförmige Erhebung durch eine Düse des Tintenstrahldruckers gebildet.

Gemäss einer besonders bevorzugten Ausführungsform des erfindungsgemässen Verfahrens erfolgt gemäss Schritt (c) ein Auftragen von keramischem Material in Form von Partikeln zumindest auf die zylinderförmigen Erhebungen aus der teilweise eingeengten strukturbildenden Glasursuspension und Fixieren des Materials durch die strukturbildende Glasursuspension, wobei folgend nicht fixiertes keramisches Material entfernt wird, sodass Erhebungen des reliefartigen Dekors gebildet werden.

Der Auftrag des keramischen Materials gemäss Schritt (c) bewirkt eine drastische Verkürzung der Einengungszeit, insbesondere der Trocknungszeit, der in Schritt (b) aufgebrachten strukturbildenden Glasursuspension gegenüber einem Verfahren, bei dem kein keramisches Material auf die strukturbildende Glasursuspension aufgebracht wird und statt dessen eine deckenden Glasur oder Engobe, jeweils in Form einer Suspension, direkt auf die teilweise oder vollständig getrockneten halbzylinderförmigen Erhebungen aus Glasurmaterial aufgebracht wird. Von Vorteil ist diese Weiterbildung auch, da dadurch ein reliefartiges Dekor mit einer ausgeprägteren, höheren Strukturhöhe der Erhebungen des reliefartigen Dekors erzielt werden kann.

Als strukturbildende Glasursuspension kann die oben genannte Glasursuspension verwendet werden, umfassend Wasser, zumindest eine nicht-wässrige polare Flüssigkeit, ein zumindest eine Fritte, und vorzugsweise ein Flussmittel, enthaltendes Glasurmaterial in Form von Partikeln, wobei das Glasurmaterial Partikel wenigstens einer Partikelgrößenpopulation enthält, die einen volumetrischen Durchmesser der Partikelgrösse von 10 µm ≤ d50(v) s 50 µm und von 45 µm ≤ d100(v) ≤ 100 µm aufweist.

Gemäß einer besonders bevorzugten Ausführungsform des Verfahrens wird wie oben beschrieben für Schritt (b) der Tintenstrahldrucker zum Abgeben der strukturbildenden Glasursuspension als Fixierflüssigkeit, als Tintenstrahldrucker mittels Stössel betriebener Tintenstrahldruckköpfe bereitgestellt.

Gemäss einer bevorzugten Ausführungsform wird in Schritt (a) ein trockenes oder ein feuchtes keramisches Druckmedium bereitgestellt.

Typischerweise wird ein trockenes Druckmedium bereitgestellt, indem vorzugsweise vor Schritt (a) des erfindungsgsmässen Verfahrens das Druckmedium mittels einer Trocknungseinrichtung getrocknet wird. Dies hat den Vorteil, dass während dem erfindungsgemässen Verfahren das Risiko eines Bruchs des Druckmediums aufgrund der durch die Trocknung bewirkte Erhöhung der mechanischen Stabilität des Druckmediums reduziert werden kann.

Hingegen wird in Schritt (a) ein feuchtes keramisches Druckmedium bereitgestellt, so erhöht sich während dem erfindungsgemässen Verfahren zwar das Risiko eines Bruchs des Druckmediums aufgrund der durch die Feuchtigkeit bewirkte Erniedrigung der mechanischer Stabilitätdes Druckmediums. Jedoch können Herstellungskosten und Herstellungszeit der reliefartigen Dekore auf keramische Druckmedien insgesamt reduziert werden, jedenfalls wenn der Trocknungsschritt vor Schritt (a) des erfindungsgemässen Verfahrens durch eine eigens vorgesehene Trocknungseinrichtung entfällt.

Die Feuchtigkeit des keramischen Druckmediums kann von Flüssigkeitsbestandteilen im Pulver zur Erzeugung des keramischen Druckmediums herrühren.

Dementsprechend wird gemäss einer bevorzugten Ausführungsform des erfindungsgemässen Verfahrens das keramische Druckmedium unmittelbar vor Schritt (a) mittels einer geeigneten Pressemaschine erzeugt, und anschliessend in Schritt (a) in feuchtem Zustand bereitgestellt.

Nach einem nicht beanspruchten Aspekt wird ein mit einem reliefartigen ' Dekor versehenes keramisches Druckmedium mit einem ein- oder mehrfarbigen Motiv bereitgestellt, der einen reduzierten Farb- und/oder Glanzbanding Effekt zeigt oder gar frei ist von Farb- und/oder Glanzbanding Effekt ist.

Das nicht beanspruchte gebrannte, mit einem reliefartigen Dekor versehene keramische Druckmedium umfasst, auf einem Teil seiner Oberfläche mit keramischem Material gebildete Erhebungen des reliefartigen Dekors, auf welchen Erhebungen ein ein- oder mehrfarbiges Bildmotiv, das mit einer oder mehreren Tinten mit Farbpigmenten gebildet ist, aufgebracht.

Nach einem Aspekt ist zwischen dem ein- oder mehrfarbigen Bildmotiv und den Erhebungen eine Glasur- oder eine Engobe- oder Smaltobeschicht vorgesehen, sodass das ein- oder mehrfarbige Bildmotiv direkt auf die Glasur- oder die Engobe- oder die Smaltobeschicht aufgebracht ist.

Gemäss einem weiteren Aspekt umfasst das Druckmedium eine grundierende Glasur- oder Engobe- oder Smaltobeschicht, die zwischen den Erhebungen und der Oberfläche des keramischen Druckmediums vorgesehen ist.

Besonders bevorzugt ist die grundierende Glasur- oder Engobe- oder Smaltobeschicht auch auf zumindest einem Teil der Oberfläche des keramischen Druckmediums vorgesehen, das nicht durch die Erhebungen bedeckt ist. Besonders bevorzugt ist die grundierende Glasur- oder Engobe- oder Smaltobeschicht auf die gesamte Oberfläche des keramischen Druckmediums vorgesehen.

Gemäss einem weiteren Aspekt umfassen die Erhebungen des reliefartigen Dekors eine zusätzliche strukturbildende Glasurschicht, die zwischen der Schicht aus keramischem Material der Erhebungen und der grundierenden Glasurschicht oder Engobeschicht oder Smaltobeschicht vorgesehen ist.

Gemäss einem weiteren Aspekt ist die deckende Glasur- oder Engobe- oder Smaltobeschicht zumindest auf einem Teil der Oberfläche der Täler des reliefartigen Dekors, welcher Teil der Oberflächen der Täler vorzugsweise mit zumindest einem Teil der Erhebungen des reliefartigen Dekors unmittelbar angrenzt, vorzugsweise auf die gesamte Oberfläche des reliefartigen Dekors vorgesehen.

Gemäß einem weiteren Aspekt ist auf dem aufgetragenen Bildmotiv eine Schutzschicht umfassend eine Fritte, die nach dem Einbrennen durchsichtig ist, vorgesehen.

Gemäß einem weiteren Aspekt sind die Erhebungen des reliefartigen Dekors als unmittelbar benachbarte halbzylinderförmigen Erhebungen ausgebildet, die jeweils eine Grundfläche und Mantelfläche aufweisen und deren jeweilige Längsachse sich in eine erste Richtung erstreckt, wobei deren Grundflächen und deren Mantelflächen sich teilflächig überlappen.

Gemäß einem weiteren Aspekt ist das vorgegebene Bildmotivs ausschliesslich direkt auf die jeweils auf der zumindest einen Teil der Oberflächen der Erhebungen und Täler des reliefartigen Dekors aufgebrachte deckende Glasur- oder Engobe- oder Smaltobeschicht aufgebracht.

Gemäß einer ersten Variante sind die Erhebungen des reliefartigen Dekors mit plateauartigen flachen Oberflächen ausgebildet.

Eine nicht beanspruchte alternative Ausführungsform des erfindungsgemässen Verfahrens sieht die Umkehrung der Reihenfolge der beiden Arbeitsschritte (b) und (c) vor.

Dementsprechend handelt es sich bei dem alternativen Verfahren um ein Verfahren zum Erzeugen eines reliefartigen Dekors auf einer Oberfläche eines keramischen Druckmediums, umfassend die Schritte:
a) Bereitstellen eines keramischen Druckmediums;
b1) Auftragen von keramischem Material in Form von Partikeln auf die Oberfläche des keramischen Druckmediums und
c1) Abgeben von Tropfen einer Fixierflüssigkeit mit einer Vielzahl von Düsen eines Tintenstrahldruckers auf einen Teil der Oberfläche des aufgebrachten keramischen Materials und Fixieren des keramischen Materials durch die Fixierflüssigkeit, wobei folgend überschüssiges Material entfernt wird, sodass Erhebungen des reliefartigen Dekors gebildet werden;
d) Aufbringen eines vorgegebenen ein- oder mehrfarbigen Bildmotivs auf die Oberflächen der Erhebungen, indem eine oder mehrere Tinten mit anorganischen Farbpigmenten auf die Oberflächen der Erhebungen aufgebracht werden;
e) Brennen des keramischen Druckmediums, um ein eingebranntes reliefartiges Dekor auf der Oberfläche des Druckmediums zu erzeugen.

Nach diesem alternativen Verfahren wird nach Schritt (c1) und vor Schritt (d) eine deckende Glasur oder Engobe oder Smaltobe, jeweils in Form einer Suspension, auf die Erhebungen mit einer Abgabevorrichtung durch Besprühen oder Giessen derselben auf die entsprechenden Oberflächen aufgetragen und eingeengt.

Sämtliche bevorzugten Ausführungsformen des erfindungsgemässen Verfahrens können auch eine bevorzugte Ausführungsform des alternativen Verfahrens sein. Wichtig ist allerdings, dass vor dem Auftrag des keramischen Materials gemäss Schritt (b1) eine gegebenenfalls vorher aufgebrachte grundierende Glasur- oder Engobeschicht teilweise, vorzugsweise im Wesentlichen vollständig getrocknet oder vollständig getrocknet wird.

## Patentansprüche

1. Verfahren zum Erzeugen eines reliefartigen Dekors auf einer Oberfläche eines keramischen Druckmediums, umfassend die Schritte:
a) Bereitstellen eines keramischen Druckmediums;
b) Abgeben von Tropfen einer Fixierflüssigkeit mit einer Vielzahl von Düsen eines Tintenstrahldruckers auf einen Teil der Oberfläche;
c) Auftragen von keramischem Material in Form von Partikeln zumindest auf die abgegebene Fixierflüssigkeit und Fixieren des Materials durch die Fixierflüssigkeit, wobei folgend nicht fixiertes Material entfernt wird, sodass Erhebungen des reliefartigen Dekors gebildet werden;
d) Aufbringen eines vorgegebenen ein- oder mehrfarbigen Bildmotivs auf die Oberflächen der Erhebungen, indem eine oder mehrere Tinten mit anorganischen Farbpigmenten auf die Oberflächen der Erhebungen aufgebracht werden;
e) Brennen des keramischen Druckmediums, um ein eingebranntes reliefartiges Dekor auf der Oberfläche des Druckmediums zu erzeugen;
wobei nach Schritt (c) und vor Schritt (d) eine deckende Glasur oder Engobe oder Smaltobe, jeweils in Form einer Suspension, auf zumindest einem Teil der Erhebungen mit einer Abgabevorrichtung durch Besprühen oder Giessen derselben auf die entsprechenden Oberflächen aufgetragen und eingeengt wird, wobei die Fixierflüssigkeit eine strukturbildende Glasursuspension ist, die zumindest eine Fritte, und vorzugsweise ein Flussmittel, enthaltendes Glasurmaterial in Form von Partikeln umfasst.

2. Verfahren nach Anspruch 1 **dadurch gekennzeichnet, dass** vor Schritt (b) eine grundierende Glasur oder Engobe oder Smaltobe, jeweils in Form einer Suspension, auf zumindest einem Teil, vorzugsweise auf die gesamte Oberfläche des keramischen Druckmediums durch Besprühen oder Giessen derselben mit einer Abgabevorrichtung aufgetragen und teilweise oder vollständig eingeengt wird.

3. Verfahren nach Anspruch 1 oder 2 **dadurch gekennzeichnet, dass** nach Schritt (c) und vor Schritt (d) die deckende Glasur oder Engobe oder Smaltobe zumindest auf einem Teil der Oberflächen der Täler des reliefartigen Dekors, welcher Teil der Oberflächen der Täler vorzugsweise mit zumindest einem Teil der Erhebungen des reliefartigen Dekors unmittelbar angrenzt, vorzugsweise auf die gesamte Oberfläche des reliefartigen Dekors aufgebracht und eingeengt wird.

4. Verfahren nach Anspruch 3 **dadurch gekennzeichnet, dass** gemäss Schritt (d) das Aufbringen des vorgegebenen Bildmotivs ausschliesslich direkt auf die jeweils auf den zumindest einen Teil der Oberflächen der Erhebungen und der Täler des reliefartigen Dekors aufgebrachte deckende Glasur- oder Engobe oder Smaltobe aufgebracht wird.

5. Verfahren nach zumindest einem der vorhergehenden Ansprüche **dadurch gekennzeichnet, dass** Schritt (d) erfolgt, indem Tropfen einer oder mehrerer Tinten mit anorganischen Farbpigmenten aus einer Applikationsvorrichtung, vorzugsweise aus Düsen eines Tintenstrahldruckers, auf die entsprechende Oberfläche oder Oberflächen des keramischen Druckmediums abgegeben werden.

6. Verfahren nach zumindest einem der vorhergehenden Ansprüche **dadurch gekennzeichnet, dass** die Abgabevorrichtung zur Abgabe der deckenden Glasur- oder Engobe- oder Smaltobesuspension und zum Auftrag der grundierende Glasur- oder Engobe- oder Smaltobesuspension dieselbe Abgabevorrichtung ist oder unterschiedliche Abgabevorrichtungen sind, die Sprühdüsen umfasst oder umfassen.

7. Verfahren nach zumindest einem der vorhergehenden Ansprüche **dadurch gekennzeichnet, dass** die Fixierflüssigkeit entweder mit einem Tintenstrahldrucker mittels Stössel betriebener Tintenstrahldruckköpfe oder mit einem gewöhnlichen DOD-Tintenstrahldrucker abgegeben wird.

8. Verfahren nach zumindest einem der vorhergehenden Ansprüche **dadurch gekennzeichnet, dass** die mit Schritt (c) gebildeten Erhebungen vor dem entsprechenden Auftrag der deckenden Glasur oder Engobe oder Smaltobe durch Einwirken von Energie, insbesondere Wärme, mithilfe einer geeigneten Energiequelle teilweise oder vollständig getrocknet wird.

9. Verfahren nach zumindest einem der vorhergehenden Ansprüche, **dadurch gekennzeichnet, dass** der Auftrag der Fixierflüssigkeit gemäss Schritte (b) und der Auftrag des keramischen Materials gemäss Schritt (c) dergestalt erfolgen, dass die Erhebungen mit plateauartigen flachen Oberflächen ausgebildet werden.

## Claims

1. Method for producing a relief-like decor on a surface of a ceramic printing medium, comprising the steps:
a) providing a ceramic printing medium;
b) dispensing drops of a fixing liquid onto a portion of the surface using a plurality of nozzles of an inkjet printer;
c) applying ceramic material in the form of particles at least to the dispensed fixing liquid and fixing the material by the fixing liquid, wherein unfixed material is subsequently removed so that elevations of the relief-like decor are formed;
d) applying a predetermined single-color or multi-colored motif to the surfaces of the elevations by applying one or more inks with inorganic color pigments to the surfaces of the elevations;
e) firing the ceramic printing medium to create a fired relief-like decor on the surface of the printing medium;
wherein after step (c) and before step (d) a covering glaze or engobe or smaltobe, each in the form of a suspension, is applied to at least some of the elevations by spraying or pouring it by means of a dispensing device onto the corresponding surfaces and concentrated, wherein the fixing liquid is a structure-forming glaze suspension which comprises at least one frit, and preferably a glaze material containing a fluxing agent in the form of particles.

2. The method according to claim 1, **characterized in that** before step (b) a priming glaze or engobe or smaltobe, each in the form of a suspension, is applied on at least a part, preferably on the entire surface of the ceramic printing medium by spraying or pouring it by means of a dispensing device and is partially or completely concentrated.

3. The method according to claim 1 or 2, **characterized in that** after step (c) and before step (d) the covering glaze or engobe or smaltobe is applied at least one part of the surfaces of the valleys of the relief-like decor, which part of the surfaces of the valleys is preferably directly adjacent to at least part of the elevations of the relief-like decor, preferably to the entire surface of the relief-like decor, and is concentrated.

4. The method according to claim 3, **characterized in that**, according to step (d), the predetermined motif is applied exclusively directly to the covering glaze or engobe or smaltobe applied respectively to the at least one part of the surfaces of the elevations and the valleys of the relief-like decor.

5. The method according to at least one of the preceding claims, **characterized in that** step (d) is carried out by dispensing drops of one or more inks with inorganic color pigments from an application device, preferably from nozzles of an inkjet printer, onto the corresponding surface or surfaces of the ceramic printing medium.

6. The method according to at least one of the preceding claims, **characterized in that** the dispensing device for dispensing the covering glaze or engobe or smaltobe suspension and for applying the priming glaze or engobe or smaltobe suspension is the same dispensing device or are different dispensing devices, which include or includes spray nozzles.

7. The method according to at least one of the preceding claims, **characterized in that** the fixing liquid is dispensed either with an inkjet printer using plunger-operated inkjet printheads or with a conventional DOD inkjet printer.

8. The method according to at least one of the preceding claims, **characterized in that**, prior to the corresponding application of the covering glaze or engobe or smaltobe, the elevations formed in step (c) are partially or completely dried by the influence of energy, in particular heat, using a suitable energy source.

9. The method according to at least one of the preceding claims, **characterized in that** the application of the fixing liquid according to step (b) and the application of the ceramic material according to step (c) are carried out in such a way that the elevations are formed with plateau-like flat surfaces.

## Revendications

1. Procédé destiné à produire un décor en relief sur une surface d'un support d'impression céramique, comprenant les étapes :
a) fournir un support d'impression céramique;
b) distribuer des gouttes d'un liquide de fixation sur une partie de la surface à l'aide d'une pluralité de buses d'une imprimante à jet d'encre;
c) appliquer un matériau céramique sous la forme de particules au moins sur le liquide de fixation distribué et fixer le matériau par le liquide de fixation, le matériau non fixé étant ensuite éliminé de manière à former des élévations du décor en relief;
d) appliquer un motif monochrome ou multicolore prédéterminé sur les surfaces des élévations en appliquant une ou plusieurs encres à pigments colorés inorganiques sur les surfaces des élévations;
e) cuire le support d'impression céramique pour créer un décor cuit en relief sur la surface du support d'impression;
et, après l'étape (c) et avant l'étape (d), un vernis ou un engobe ou un smaltobe couvrant, chacun sous la forme d'une suspension, étant appliqué sur au moins une partie des élévations à l'aide d'un dispositif de distribution en le pulvérisant ou moulant sur les surfaces correspondantes et étant concentré, le liquide de fixation étant une suspension de vernis structurant qui comprend au moins une fritte, et de préférence un matériau de vernis sous la forme de particules qui contient un fondant.

2. Le procédé selon la revendication 1, **caractérisé en ce qu'**avant l'étape (b) un vernis ou un engobe ou un smaltobe de base, chacun sous la forme d'une suspension, est appliqué sur au moins une partie, de préférence sur toute la surface du support d'impression céramique en le pulvérisant ou moulant à l'aide d'un dispositif de distribution, et concentré partiellement ou totalement.

3. Le procédé selon la revendication 1 ou 2, **caractérisé en ce qu'**après l'étape (c) et avant l'étape (d) le vernis ou l'engobe ou le smaltobe couvrant est appliqué au moins sur une partie des surfaces des vallées du décor en relief, quelle partie des surfaces des vallées est de préférence directement adjacente à au moins une partie des élévations du décor en relief, et de préférence il est appliqué sur toute la surface du décor en relief et concentré.

4. Le procédé selon la revendication 3, **caractérisé en ce que**, selon l'étape (d), le motif prédéterminé est appliqué exclusivement directement sur le vernis ou l'engobe ou le smaltobe couvrant appliqué sur au moins une partie des surfaces des élévations et des vallées du décor en relief.

5. Le procédé selon au moins l'une des revendications précédentes, **caractérisé en ce que** l'étape (d), est exécutée en distribuant des gouttes d'une ou plusieurs encres à pigments colorés inorganiques à partir d'un dispositif d'application, de préférence à partir de buses d'une imprimante à jet d'encre, sur la ou les surface(s) correspondante(s) du support d'impression céramique.

6. Le procédé selon au moins l'une des revendications précédentes, **caractérisé en ce que** le dispositif de distribution destiné à distribuer la suspension de vernis ou d'engobe ou de smaltobe couvrante et à appliquer la suspension de vernis ou d'engobe ou de smaltobe de base est le même dispositif de distribution ou sont des dispositifs de distribution différents qui comprend ou comprennent des buses de pulvérisation.

7. Le procédé selon au moins l'une des revendications précédentes, **caractérisé en ce que** le liquide de fixation est distribué soit à l'aide d'une imprimante à jet d'encre utilisant des têtes d'impression à jet d'encre actionnées par un poussoir, soit à l'aide d'une imprimante à jet d'encre classique DOD.

8. Le procédé selon au moins l'une des revendications précédentes, **caractérisé en ce que** les élévations formées en étape (c) sont séchées partiellement ou totalement par l'effet de l'énergie, en particulier l'énergie thermique, à l'aide d'une source d'énergie appropriée avant l'application correspondante du vernis ou de l'engobe ou du smaltobe couvrant.

9. Le procédé selon au moins l'une des revendications précédentes, **caractérisé en ce que** l'application du liquide de fixation selon l'étape (b) et l'application du matériau céramique selon l'étape (c) sont réalisées de telle manière que les élévations sont formées avec des surfaces planes en forme de plateau.
